(19) 

(11) **EP 4 793 318 A1**

(12) **EUROPEAN PATENT APPLICATION**
published in accordance with Art. 153(4) EPC

(43) Date of publication:
**19.08.2026 Bulletin 2026/34**

(21) Application number: **24877149.5**

(22) Date of filing: **07.10.2024**

(51) International Patent Classification (IPC):
***C08L 67/04*** *(2006.01)* ***B32B 27/36*** *(2006.01)*
***C08J 5/18*** *(2006.01)* ***C08K 3/34*** *(2006.01)*

(52) Cooperative Patent Classification (CPC):
**B32B 27/36; C08J 5/18; C08K 3/34; C08L 67/04**

(86) International application number:
**PCT/JP2024/035784**

(87) International publication number:
**WO 2025/079554 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 JP 2023176396**

(71) Applicant: **Kaneka Corporation**
**Osaka-shi, Osaka 530-8288 (JP)**

(72) Inventors:
- **KAMIKARIYA, Naoya**
  **Osaka 566-0072 (JP)**
- **KITAYAMA, Fuminobu**
  **Osaka 566-0072 (JP)**

(74) Representative: **Vossius & Partner Patentanwälte Rechtsanwälte mbB**
**Siebertstraße 3**
**81675 München (DE)**

(54) **RESIN COMPOSITION FOR FILM MOLDING, FILM, AND LAMINATE**

(57) A resin composition for film molding contains a poly(3-hydroxyalkanoate) resin (A) and a polylactic acid resin (B). The amount of the polylactic acid resin (B) is from 20 to 65 wt% based on the total amount of the poly(3-hydroxyalkanoate) resin (A) and the polylactic acid resin (B). The amount of a fatty acid amide (C) is from 0 to less than 0.5 parts by weight per 100 parts by weight of the poly(3-hydroxyalkanoate) resin (A). The total proportion of the poly(3-hydroxyalkanoate) resin (A) and the polylactic acid resin (B) in the total amount of the resin composition for film molding, excluding any inorganic filler, is 98.5 wt% or more.

EP 4 793 318 A1

## Description

## Technical Field

The present invention relates to a resin composition for film molding that contains a poly(3-hydroxyalkanoate) resin, a film containing the composition, and a laminate containing the composition.

## Background Art

In recent years, environmental problems associated with waste plastics have become an issue of great concern. In particular, waste plastics have caused serious marine pollution, and there is a demand for the widespread use of biodegradable plastics which are degradable in the natural environment.

Various such biodegradable plastics are known. Among them, poly(3-hydroxyalkanoate) resins (hereinafter also referred to as P3HA resins) are thermoplastic polyesters that are produced and accumulated as energy storage substances in the cells of many types of microorganisms. These resins are biodegradable in seawater as well as in soil, and are therefore attracting attention as materials that can be a solution to the problems mentioned above.

However, P3HA resins are known to crystallize more slowly than common thermoplastic resins. Thus, when a P3HA resin is mixed with another resin and additives to prepare a resin compound, or when a P3HA resin is molded into a film, the P3HA resin does not readily solidify after thermal melting, which is disadvantageous.

To address this problem, techniques are known in which the solidification properties of a P3HA resin are improved by adding a nucleating agent that accelerates crystallization of the P3HA resin. Fatty acid amides have been reported as an example of such nucleating agents (see Patent Literature 1, for example). In Examples of this literature, a fatty acid amide is added in an amount of 1 to 5 parts by weight per 100 parts by weight of a P3HA resin.

Patent Literature 2 is directed to a resin composition containing a P3HA resin in combination with another biodegradable resin, and teaches an example in which behenamide, which is a type of fatty acid amide, is incorporated as a lubricant into the resin composition. In this example, behenamide is added in an amount of 0.5 parts by weight per 100 parts by weight of the P3HA resin.

## Citation List

### Patent Literature

PTL 1: WO 2009/122673 A1
PTL 2: Japanese Laid-Open Patent Application Publication No. 2022-185793

## Summary of Invention

## Technical Problem

When a blend of a P3HA resin with behenamide is molded into a film and the surface of the resulting film is printed, the printing ink may be repelled by the surface of the film. In addition, when aluminum or the like is vapor-deposited on the surface of the film, the adhesion of the vapor-deposited layer may be insufficient.

In an effort to address these issues, the present inventors succeeded in improving printability and vapor deposition properties by reducing the amount of the fatty acid amide as described in Patent Literature 1 or 2. However, reducing the amount of the fatty acid amide may retard solidification after thermal melting, thereby making compounding or film molding difficult or leading to a significant decline in productivity.

In view of the above circumstances, the present invention aims to provide a resin composition for film molding that contains a poly(3-hydroxyalkanoate) resin, the resin composition being adapted to achieve both good solidification properties after thermal melting and good printability and/or vapor deposition properties.

## Solution to Problem

As a result of intensive studies aimed at solving the above problem, the present inventors have found that a poly(3-hydroxyalkanoate) resin-containing composition can achieve both good solidification properties after thermal melting and good printability and/or vapor deposition properties when the amount of a fatty acid amide added to the composition is reduced and a given amount of a polylactic acid resin is incorporated into the composition. Based on this

finding, the inventors have completed the present invention.

Specifically, the present invention relates to a resin composition for film molding, containing:

a poly(3-hydroxyalkanoate) resin (A); and
a polylactic acid resin (B), wherein
an amount of the polylactic acid resin (B) is from 20 to 65 wt% based on a total amount of the poly(3-hydroxyalkanoate) resin (A) and the polylactic acid resin (B),
an amount of a fatty acid amide (C) is from 0 to less than 0.5 parts by weight per 100 parts by weight of the poly(3-hydroxyalkanoate) resin (A), and
a total proportion of the poly(3-hydroxyalkanoate) resin (A) and the polylactic acid resin (B) in a total amount of the resin composition for film molding, excluding any inorganic filler, is 98.5 wt% or more.

The present invention also relates to a film having the compositional makeup described above.

The present invention further relates to a laminate including: a first resin layer that is the film described above; and a second resin layer provided on the first resin layer.

## Advantageous Effects of Invention

The present invention can provide a resin composition for film molding that contains a poly(3-hydroxyalkanoate) resin, the resin composition being adapted to achieve both good solidification properties after thermal melting and good printability and/or vapor deposition properties.

According to a preferred aspect of the present invention, the resin composition for film molding can be molded into a film through thermal melting, and the molding speed during this process can be increased.

According to a preferred aspect of the present invention, the film can be stretched continuously and stably. Furthermore, a high-quality stretched film can be obtained at a high stretch ratio without uneven stretching.

According to a preferred aspect of the present invention, a film having transparency can be obtained.

## Description of Embodiments

Hereinafter, an embodiment of the present invention will be described. The present invention is not limited to the embodiment described below.

The present embodiment relates to a resin composition for film molding that contains a poly(3-hydroxyalkanoate) resin (A) and a polylactic acid resin (B).

[Poly(3-Hydroxyalkanoate) Resin (A)]

The poly(3-hydroxyalkanoate) resin (A) (hereinafter also referred to as the P3HA resin (A)) may be a single poly(3-hydroxyalkanoate) resin or a mixture of two or more poly(3-hydroxyalkanoate) resins. However, in order to reliably ensure high film strength and good film productivity, the P3HA resin (A) is preferably a mixture of at least two poly(3-hydroxyalkanoate) resins differing in the types and/or proportions of the constituent monomers.

The P3HA resin (A) is a polymer having 3-hydroxyalkanoate units. Specifically, the P3HA resin (A) is preferably a polymer containing units represented by the following formula (1).

$$[\text{-CHR-CH}_2\text{-CO-O-}] \qquad (1)$$

In the formula (1), R is an alkyl group represented by $C_pH_{2p+1}$, and p is an integer from 1 to 15. Examples of R include linear or branched alkyl groups such as methyl, ethyl, propyl, methylpropyl, butyl, isobutyl, *t*-butyl, pentyl, and hexyl groups. The integer p is preferably from 1 to 10 and more preferably from 1 to 8.

The P3HA resin (A) is particularly preferably a microbially produced poly(3-hydroxyalkanoate) resin. In microbially produced poly(3-hydroxyalkanoate) resins, all 3-hydroxyalkanoate units are contained as (*R*)-3-hydroxyalkanoate units.

The P3HA resin (A) preferably contains 50 mol% or more, more preferably 60 mol% or more, even more preferably 70 mol% or more, of 3-hydroxyalkanoate units (in particular, the units represented by the formula (1)) based on the total structural units. The P3HA resin (A) may contain only one type or two or more types of 3-hydroxyalkanoate units as polymer structural units, or may contain other units (such as 4-hydroxyalkanoate units) in addition to one type or two or more types of 3-hydroxyalkanoate units.

The P3HA resin (A) is preferably a homopolymer or a copolymer containing 3-hydroxybutyrate (hereinafter also referred to as 3HB) units. Such polymers may be hereinafter collectively referred to as "poly(3-hydroxybutyrate) resins." In

particular, all of the 3-hydroxybutyrate units are preferably (*R*)-3-hydroxybutyrate units. The P3HA resin (A) preferably includes a copolymer of 3-hydroxybutyrate units and other hydroxyalkanoate units.

Specific examples of poly(3-hydroxybutyrate) resins include poly(3-hydroxybutyrate), poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-co-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, in terms of film productivity and film mechanical properties, poly(3-hydroxybutyrate-co-3-hydroxyhexanoate) or poly(3-hydroxybutyrate-co-4-hydroxybutyrate) is preferred.

Poly(3-hydroxybutyrate-co-3-hydroxyhexanoate) is particularly preferred for the following reasons: its melting point and crystallinity can be changed by varying the proportions of the repeating units, and thus its physical properties such as Young's modulus and heat resistance can be adjusted and controlled to levels intermediate between those of polypropylene and polyethylene; and poly(3-hydroxybutyrate-co-3-hydroxyhexanoate) is a plastic that is easy to produce industrially and has useful physical properties. In particular, among poly(3-hydroxybutyrate) resins that are readily thermally decomposed when heated at 180 °C or higher, poly(3-hydroxybutyrate-co-3-hydroxyhexanoate) can have a low melting point and be moldable at low temperatures. Poly(3-hydroxybutyrate-co-3-hydroxyhexanoate) is preferred also in this respect.

Examples of commercially available poly(3-hydroxybutyrate-co-3-hydroxyhexanoate) include "Kaneka Biodegradable Polymer Green Planet™" of Kaneka Corporation.

When the P3HA resin (A) contains a copolymer of 3-hydroxybutyrate units and other hydroxyalkanoate units, the average ratio between the 3-hydroxybutyrate units and the other hydroxyalkanoate units (3-hydroxybutyrate units/other hydroxyalkanoate units) in the total monomer units constituting the P3HA resin (A) is preferably from 99/1 to 80/20 (mol%/mol%), more preferably from 97/3 to 82/18 (mol%/mol%), and even more preferably from 95/5 to 85/15 (mol%/mol%) in order to ensure both good strength of the resulting film and good film productivity.

The average ratio between different monomer units in the total monomer units constituting the P3HA resin (A) can be determined by a method known to those skilled in the art, such as the method described in paragraph [0047] of WO 2013/147139 A1. The term "average ratio" refers to the molar ratio between different monomer units in the total monomer units constituting the P3HA resin (A). When the P3HA resin (A) is a mixture of two or more poly(3-hydroxyalkanoate) resins, the average ratio refers to the molar ratio between different monomer units contained in the total mixture.

In order to reliably ensure both good solidification properties after thermal melting and high film strength, the P3HA resin (A) preferably contains at least a poly(3-hydroxyalkanoate) copolymer (A1). To further improve solidification properties after thermal melting, the P3HA resin (A) more preferably contains a poly(3-hydroxybutyrate) (A2) in addition to the copolymer (A1). The following describes each of the polymers (A1) and (A2).

[Poly(3-Hydroxyalkanoate) Copolymer (A1)]

The poly(3-hydroxyalkanoate) copolymer (A1) is particularly preferably a copolymer of 3-hydroxybutyrate units and other hydroxyalkanoate units. In particular, in order to improve solidification properties after thermal melting, it is preferable to use a copolymer in which the proportion of the other hydroxyalkanoate units in the total amount of 3-hydroxybutyrate units and the other hydroxyalkanoate units is from 1 to less than 24 mol%.

In the copolymer (A1), the proportion of the other hydroxyalkanoate units is preferably from 3 to 20 mol%, more preferably from 4 to 17 mol%, and even more preferably from 5 to 14 mol%.

The copolymer (A1) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A1) is not limited to a particular range. In terms of film strength, the weight-average molecular weight is preferably $20 \times 10^4$ or more, more preferably $30 \times 10^4$ or more, and even more preferably $40 \times 10^4$ or more. The upper limit of the weight-average molecular weight is not limited to a particular value. In terms of productivity, the weight-average molecular weight is preferably up to $200 \times 10^4$, more preferably up to $150 \times 10^4$, and even more preferably up to $100 \times 10^4$.

The weight-average molecular weight of a poly(3-hydroxyalkanoate) resin can be measured as a polystyrene-equivalent molecular weight by gel permeation chromatography (HPLC GPC system manufactured by Shimadzu Corporation) using a chloroform solution of the resin. The columns used in gel permeation chromatography may be any columns suitable for weight-average molecular weight measurement.

It is particularly preferable to use, as the poly(3-hydroxyalkanoate) copolymer (A1), a copolymer (A1-1) that contains 3-hydroxybutyrate units and other hydroxyalkanoate units and in which the proportion of the other hydroxyalkanoate units is from 1 to less than 10 mol%. The use of such a copolymer makes it easier to ensure both high film strength and good solidification properties after thermal melting.

In the copolymer (A1-1), the proportion of the other hydroxyalkanoate units is preferably from 3 to 9 mol%, more preferably from 4 to 8 mol%, and even more preferably from 5 to 7 mol%.

The copolymer (A1-1) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A1-1) is not limited to a particular range. In terms of film strength, the weight-average molecular weight is preferably $20 \times 10^4$ or more, more preferably $30 \times 10^4$ or more, and even more preferably $40 \times 10^4$ or more. The upper limit of the weight-average molecular weight is not limited to a particular value. In terms of productivity, the weight-average molecular weight is preferably up to $200 \times 10^4$, more preferably up to $150 \times 10^4$, and even more preferably up to $100 \times 10^4$.

The poly(3-hydroxyalkanoate) copolymer (A1) may consist solely of the copolymer (A1-1). Alternatively, the poly(3-hydroxyalkanoate) copolymer (A1) may further include, in addition to the copolymer (A1-1), a copolymer (A1-2) that contains 3-hydroxybutyrate units and other hydroxyalkanoate units and in which the proportion of the other hydroxyalkanoate units is from 10 to less than 24 mol%. The use of the copolymers (A1-1) and (A1-2) in combination can further enhance the strength of the film.

In the copolymer (A1-2), the proportion of the other hydroxyalkanoate units is preferably from 10 to 20 mol%, more preferably from 10 to 17 mol%, and even more preferably from 10 to 14 mol%.

The copolymer (A1-2) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A1-2) is not limited to a particular range. In terms of film strength, the weight-average molecular weight is preferably $20 \times 10^4$ or more, more preferably $30 \times 10^4$ or more, and even more preferably $40 \times 10^4$ or more. The upper limit of the weight-average molecular weight is not limited to a particular value. In terms of productivity, the weight-average molecular weight is preferably up to $200 \times 10^4$, more preferably up to $150 \times 10^4$, and even more preferably up to $100 \times 10^4$.

When the copolymer (A1) includes the copolymers (A1-1) and (A1-2), the weight ratio between the copolymers (A1-1) and (A1-2) (A1-1/A1-2) is preferably from 40/60 to 99/1, more preferably from 60/40 to 97/3, and even more preferably from 80/20 to 95/5 in order to take advantage of the properties of the two copolymers.

The copolymer (A1) may consist solely of the copolymer (A1-1) or may consist solely of the copolymers (A1-1) and (A1-2). Alternatively, the copolymer (A1) may further contain a poly(3-hydroxyalkanoate) copolymer that is classified neither as the copolymer (A1-1) nor as the copolymer (A1-2). Examples of such poly(3-hydroxyalkanoate) copolymers include a copolymer that contains 3-hydroxybutyrate units and other hydroxyalkanoate units and in which the proportion of the other hydroxyalkanoate units is 24 mol% or more.

The total proportion of the copolymers (A1-1) and (A1-2) in the total amount of the copolymer (A1) is preferably, for example, from 70 to 100 wt%, more preferably from 80 to 100 wt%, and even more preferably from 90 to 100 wt%.

[Poly(3-Hydroxybutyrate) (A2)]

The resin composition for film molding according to the present embodiment more preferably further contains a poly(3-hydroxybutyrate) (A2) in addition to the poly(3-hydroxyalkanoate) copolymer (A1) described above. The poly(3-hydroxybutyrate) (A2) exhibits higher crystallinity and solidifies more readily than the copolymer (A1). Accordingly, the incorporation of the poly(3-hydroxybutyrate) (A2) can further improve solidification properties after thermal melting.

The term "poly(3-hydroxybutyrate) (A2)" refers to a homopolymer of 3-hydroxybutyrate or a polymer containing 3-hydroxybutyrate units and further containing a small amount of other hydroxyalkanoate units. Specifically, in the poly(3-hydroxybutyrate) (A2), the proportion of 3-hydroxybutyrate units in the total constituent monomer units is preferably more than 99 mol% and up to 100 mol%.

The hydroxyalkanoate units other than 3-hydroxybutyrate units that may be contained in the poly(3-hydroxybutyrate) (A2) are not limited to a particular type, and may be any hydroxyalkanoate units copolymerizable with 3-hydroxybutyrate units. Examples include 3-hydroxyalkanoate units other than 3-hydroxybutyrate units and hydroxyalkanoate units other than 3-hydroxyalkanoate units (e.g., 4-hydroxyalkanoate units). In particular, 3-hydroxyhexanoate units are preferred.

The weight-average molecular weight of the poly(3-hydroxybutyrate) (A2) is not limited to a particular range. In terms of film strength and solidification properties, the weight-average molecular weight is preferably from $20 \times 10^4$ to $200 \times 10^4$ and more preferably from $30 \times 10^4$ to $150 \times 10^4$. The weight-average molecular weight can be measured by the method described above.

In the resin composition for film molding according to the present embodiment, the proportion of the poly(3-hydroxybutyrate) (A2) in the total weight of the poly(3-hydroxyalkanoate) copolymer (A1) and the poly(3-hydroxybutyrate) (A2) is preferably 1 wt% or more, more preferably 3 wt% or more, and even more preferably 5 wt% or more in order to improve solidification properties through incorporation of the poly(3-hydroxybutyrate) (A2). In terms of film strength, the proportion is preferably up to 50 wt%, more preferably up to 40 wt%, even more preferably up to 30 wt%, still more

preferably up to 25 wt%, and particularly preferably up to 20 wt%.

The total proportion of the copolymer (A1) and the poly(3-hydroxybutyrate) (A2) in the total amount of the P3HA resin (A) is preferably, for example, from 70 to 100 wt%, more preferably from 80 to 100 wt%, and even more preferably from 90 to 100 wt%.

The method used to obtain a blend of two or more poly(3-hydroxyalkanoate) resins is not limited to a particular technique. A blend of two or more poly(3-hydroxyalkanoate) resins may be obtained by microbial production or chemical synthesis. Alternatively, a blend of two or more resins may be obtained by melting and kneading the resins using a device such as an extruder, a kneader, a Banbury mixer, or a roll mill, or may be obtained by dissolving and mixing the resins in a solvent and drying the resulting mixture.

The weight-average molecular weight of the total P3HA resin (A) is not limited to a particular range. In terms of film strength and film productivity, the weight-average molecular weight is preferably from $20 \times 10^4$ to $200 \times 10^4$, more preferably from $30 \times 10^4$ to $150 \times 10^4$, and even more preferably from $40 \times 10^4$ to $100 \times 10^4$.

The method used to produce poly(3-hydroxyalkanoate) resins is not limited to a particular technique, and may be a production method using chemical synthesis or a microbial production method. A microbial production method is more preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable poly(3-hydroxyalkanoate) resin synthesis-related gene may be used depending on the poly(3-hydroxyalkanoate) resin to be produced. The culture conditions including the type of the substrate may be optimized depending on the poly(3-hydroxyalkanoate) resin to be produced.

An unmodified poly(3-hydroxyalkanoate) resin can be used as the P3HA resin (A). Alternatively, a resin obtained by modifying an unmodified poly(3-hydroxyalkanoate) resin with a resin-reactive material such as a peroxide (hereinafter referred to as a "modifying material") may be used.

The modifying material is not limited to a particular compound, and may be any compound reactive with poly(3-hydroxyalkanoate) resins. In terms of handleability and ease of control of the reaction with poly(3-hydroxyalkanoate) resins, the use of an organic peroxide is preferred. The organic compound used may be any suitable known compound.

[Polylactic Acid Resin (B)]

The polylactic acid resin (B) is a polyester containing lactic acid as a constituent monomer. While poly(3-hydroxyalkanoate) resins have a glass transition temperature of around 0 °C, polylactic acid resins generally have a glass transition temperature of around 60 °C and can thus solidify at a temperature lower than 60 °C. Accordingly, the incorporation of the polylactic acid resin (B) can improve the solidification properties of the poly(3-hydroxyalkanoate) resin-containing composition.

Generally, polylactic acid resins have a glass transition temperature of around 60 °C and, when rapidly cooled from a molten state, they do not readily crystallize but become amorphous. Thus, the incorporation of the polylactic acid resin (B) into a film facilitates softening of the film even at a relatively low temperature slightly above 60 °C. Accordingly, the incorporation of the polylactic acid resin (B) into a poly(3-hydroxyalkanoate) resin-containing film can enhance the stretchability of the film. This makes it possible to prevent film breakage during stretching and obtain a high-quality stretched film without uneven stretching. In addition, film stretching can be carried out continuously and stably. Furthermore, high stretch ratios can be achieved.

The polylactic acid resin (B) is preferably a homopolymer of lactic acid, but may contain a small amount of a monomer other than lactic acid.

The lactic acid of the polylactic acid resin (B) may be either L-lactic acid or D-lactic acid or may be a combination of both. In the latter case, the ratio between L-lactic acid and D-lactic acid is not limited to a particular range.

The polylactic acid resin (B) may be a poly(L-lactic acid) resin, a poly(D-lactic acid) resin, or a poly(DL-lactic acid) resin. A blend of these resins may be used.

Examples of the other monomer that may be contained in the polylactic acid resin (B) include aliphatic hydroxycarboxylic acids other than lactic acid, aliphatic polyhydric alcohols, aliphatic polycarboxylic acids, and polyfunctional polysaccharides.

When the polylactic acid resin (B) is a copolymer of lactic acid and another monomer, it is preferable, in terms of crystallinity, that the proportion of the other monomer in the total monomers contained in the polylactic acid resin (B) be from about 0 to about 3 mol%. The proportion is more preferably from 0 to 2 mol%.

The polylactic acid resin (B) may be either a crystalline polylactic acid resin or an amorphous polylactic acid resin.

In terms of heat resistance against thermal shrinkage during a post-process such as printing or vapor deposition, the use of a crystalline polylactic acid resin is preferred. Among crystalline polylactic acid resins, a polylactic acid resin that exhibits a melting point peak with a peak temperature below 170 °C in differential scanning calorimetry is particularly preferred.

The peak temperature of the melting point peak of the polylactic acid resin (B) (hereinafter also referred to as the "melting point peak temperature" or "melting point") is preferably 165 °C or lower and more preferably 160 °C or lower in order to increase film productivity and enhance the stretchability and strength of the film. The peak temperature is even more preferably lower than 160 °C and particularly preferably 155 °C or lower. The peak temperature is preferably at least 120 °C, more preferably at least 130 °C, and even more preferably at least 140 °C in order to enhance film productivity and film stretchability.

The "melting point peak temperature" refers to a peak top temperature Tm of a crystalline melting peak on a DSC curve obtained by differential scanning calorimetry (DSC). The DSC curve is obtained by weighing about 5 mg of the resin to be analyzed and heating the weighed resin from 0 to 200 °C at a rate of 10 °C/min in a differential scanning calorimeter.

The polylactic acid resin (B) which exhibits a melting point peak temperature as described above is not limited to a particular resin and may be a commercially available product. Specific examples include polylactic acid resins in which L-lactic acid constitutes 88 to 98% of the lactic acid units.

In order to enhance film productivity and film stretchability, the melting point peak temperature exhibited by the polylactic acid resin (B) is preferably close to a melting point peak temperature exhibited by the P3HA resin (A). Specifically, the absolute value of the difference between the melting point peak temperature of the polylactic acid resin (B) and the melting point peak temperature of the P3HA resin (A) is preferably 40 °C or less, more preferably 30 °C or less, and even more preferably 20 °C or less.

The melting point peak temperature of the P3HA resin (A) is measured in the same manner as that of the polylactic acid resin (B). When a plurality of melting point peaks appear on a DSC curve obtained for the P3HA resin (A), the peak temperature of the melting point peak that exists in a higher temperature range than the other melting point peaks is determined as the melting point peak temperature of the P3HA resin (A).

The molecular weight of the polylactic acid resin (B) is not limited to a particular range and may be set as appropriate. The number-average molecular weight is preferably from $1 \times 10^3$ to $70 \times 10^4$ and more preferably from $1 \times 10^4$ to $30 \times 10^4$.

The lactic acid material used to produce the polylactic acid resin (B) is not limited to a particular type; L-lactic acid, D-lactic acid, DL-lactic acid, or a mixture thereof may be used. Alternatively, L-lactide, D-lactide, meso-lactide, or a mixture thereof may also be used. Lactic acid obtained by microbial fermentation of a plant-derived renewable material such as starch can be suitably used.

The method for producing the polylactic acid resin (B) is not limited to a particular technique and may be any known method such as dehydration polycondensation or ring-opening polymerization.

In the resin composition for film molding according to the present embodiment, the amount of the polylactic acid resin (B) is from 20 to 65 wt% based on the total amount of the P3HA resin (A) and the polylactic acid resin (B). By incorporating the polylactic acid resin (B) in an amount of 20 wt% or more, good solidification properties after thermal melting can be achieved despite the small amount of a fatty acid amide (C) used as a component to improve solidification properties. In order to further improve solidification properties and enhance film stretchability, the amount of the polylactic acid resin (B) is preferably 25 wt% or more, more preferably 30 wt% or more, and even more preferably 35 wt% or more. The amount of the polylactic acid resin (B) may be 40 wt% or more, 45 wt% or more, 50 wt% or more, or 55 wt% or more.

Limiting the amount of the polylactic acid resin (B) to 65 wt% or less can enhance the biodegradability (in particular, biodegradability in composting and marine degradability) of the resin composition for film molding and the resulting film. The amount of the polylactic acid resin (B) is preferably 60 wt% or less, more preferably 50 wt% or less, and even more preferably 45 wt% or less.

The resin composition for film molding according to the present embodiment is a resin film primarily composed of the P3HA resin (A) and the polylactic acid resin (B). Specifically, the total proportion of the P3HA resin (A) and the polylactic acid resin (B) in the total amount of the resin composition for film molding, excluding any inorganic filler, is 98.5 wt% or more. Accordingly, the biodegradability of the resin composition for film molding and the resulting film can be enhanced. In addition, the amount of any component that can cause deterioration in printability and/or vapor deposition properties can be reduced, so that printability and/or vapor deposition properties on the film surface can be improved.

The total proportion of the P3HA resin (A) and the polylactic acid resin (B) is preferably 99.0 wt% or more, more preferably 99.5 wt% or more, and even more preferably 99.9 wt% or more. The total proportion may be 100 wt%. As used herein, the term "total proportion of the resins (A) and (B)" refers to the total proportion of the two resins in the total amount of the resin composition for film molding when the resin composition for film molding does not contain any inorganic filler. When the resin composition for film molding contains an inorganic filler, the term refers to the total proportion of the two resins in the total amount of the resin composition excluding the inorganic filler. As used herein, the term "inorganic filler" is intended to include a layered clay mineral (D) described later and an inorganic filler not classified as the component (D) (examples include silica compounds such as crystalline silica, molten silica, and amorphous silica and metal salt

compounds such as calcium carbonate, magnesium carbonate, and barium sulfate).

[Fatty Acid Amide (C)]

In the resin composition for film molding according to the present embodiment, the amount of a fatty acid amide (C), which is known to function as a nucleating agent for poly(3-hydroxyalkanoate) resins, is reduced. Accordingly, printability and/or vapor deposition properties on the film surface can be improved.

The resin composition for film molding according to the present embodiment contains the polylactic acid resin (B) in a given amount. Accordingly, despite the small amount of the fatty acid amide (C), solidification after thermal melting is accelerated, and the time required for compounding or film molding can be shortened.

Examples of the fatty acid amide (C) include behenamide, oleamide, erucamide, stearamide, palmitamide, *N*-stearyl behenamide, *N*-stearyl erucamide, ethylene bis(stearamide), ethylene bis(oleamide), ethylene bis(erucamide), ethylene bis(lauramide), ethylene bis(capramide), *p*-phenylene bis(stearamide), and a polycondensation product of ethylenediamine, stearic acid, and sebacic acid. Behenamide and/or erucamide is preferred as the fatty acid amide (C) because these compounds have a particularly superior solidification-accelerating effect. One fatty acid amide (C) may be used, or two or more fatty acid amides (C) may be used. The proportions of the fatty acid amides used can be adjusted as appropriate depending on the intended purpose.

In the resin composition for film molding according to the present embodiment, the amount of the fatty acid amide (C) is from 0 to less than 0.5 parts by weight per 100 parts by weight of the P3HA resin (A). The smaller the amount of the fatty acid amide (C), the better printability and/or vapor deposition properties can be. The amount of the fatty acid amide (C) is preferably less than 0.3 parts by weight, more preferably less than 0.2 parts by weight, and even more preferably less than 0.1 parts by weight.

In particular, in order to further improve printability and/or vapor deposition properties, the resin composition for film molding according to the present embodiment is preferably substantially free of the fatty acid amide (C). The expression "substantially free of the fatty acid amide (C)" means that the amount of the fatty acid amide (C) is so small that the fatty acid amide (C) cannot be considered to function as a nucleating agent for the P3HA resin (A), or that the amount of the fatty acid amide (C) is zero. A specific range of such a small amount of the fatty acid amide (C) is, for example, from 0 to less than 0.1 parts by weight per 100 parts by weight of the total amount of the P3HA resin (A). The amount of the fatty acid amide (C) may be less than 0.05 parts by weight or may be less than 0.01 parts by weight. The amount of the fatty acid amide (C) is most preferably zero.

[Layered Clay Mineral (D)]

The resin composition for film molding according to the present embodiment preferably further contains a layered clay mineral (D). In this case, solidification properties after thermal melting are further improved, and the time required for compounding or film molding can be further shortened.

The term "layered clay mineral" refers to a mineral containing a layered silicate as a main component.

The layered clay mineral (D) is not limited to a particular material, and any known layered clay mineral may be used. To reliably achieve the improvement effect on solidification properties, at least one layered clay mineral selected from the group consisting of smectite, mica, talc, pyrophyllite, vermiculite, chlorite, kaolinite, and serpentine is preferred. In terms of utility, mica, talc, and kaolinite are preferred. Particularly preferred is talc.

Examples of the mica include wet-ground mica and dry-ground mica.

Examples of the talc include general-purpose talc and surface-treated talc.

Examples of the kaolinite include dry kaolin, calcined kaolin, and wet kaolin.

The amount of the layered clay mineral (D) is not limited to a particular range. In order to improve solidification properties after thermal melting, the amount of the layered clay mineral (D) is preferably 0.1 parts by weight or more, more preferably 0.5 parts by weight or more, and even more preferably 1 part by weight or more per 100 parts by weight of the P3HA resin (A). In order to improve printability and/or vapor deposition properties and/or to enhance film transparency, the amount of the layered clay mineral (D) is preferably 8 parts by weight or less, more preferably 5 parts by weight or less, even more preferably 4 parts by weight or less, and particularly preferably 3 parts by weight or less per 100 parts by weight of the P3HA resin (A).

(Nucleating Agent)

The resin composition for film molding according to the present embodiment may contain a nucleating agent. Examples of nucleating agents include: sugar alcohols such as pentaerythritol, galactitol, and mannitol; orotic acid; aspartame; cyanuric acid; glycine; zinc phenylphosphonate; and boron nitride. Among these, sugar alcohols are preferred because they are particularly effective in accelerating the crystallization of the P3HA resin (A). Pentaerythritol is

particularly preferred. One nucleating agent may be used, or two or more nucleating agents may be used. The proportions of the nucleating agents used can be adjusted as appropriate depending on the intended purpose.

When a nucleating agent is used, the amount of the nucleating agent is not limited to a particular range. In terms of the balance between the crystallization-accelerating effect and the improvement in printability and/or vapor deposition properties, the amount of the nucleating agent is preferably from 0.1 to 1.5 parts by weight and more preferably from 0.5 to 1.0 parts by weight per 100 parts by weight of the P3HA resin (A).

However, the resin composition for molding according to the present embodiment may be substantially free of any sugar alcohol such as pentaerythritol. In an aspect where the resin composition is substantially free of any sugar alcohol, an undesired phenomenon can be avoided in which a sugar alcohol bleeds out from the molten resin material and soils the surface of a production device (for example, the surface of a cast roll) with which the resin composition comes into contact. In addition, printability and/or vapor deposition properties on the film surface can be further improved.

The resin composition for film molding according to the present embodiment contains the polylactic acid resin (B) in a given amount. Accordingly, even when the resin composition is substantially free of any sugar alcohol, solidification after thermal melting is accelerated, and the time required for compounding or film molding can be shortened.

The expression "substantially free of any sugar alcohol" means that the amount of sugar alcohols is so small that they cannot be considered to function as a nucleating agent for the P3HA resin (A), or that the amount of sugar alcohols is zero. A specific range of such an small amount of sugar alcohols is, for example, from 0 to less than 0.1 parts by weight per 100 parts by weight of the total amount of the P3HA resin (A). The amount of sugar alcohols may be less than 0.05 parts by weight or may be less than 0.01 parts by weight. The amount of sugar alcohols is most preferably zero.

Such sugar alcohols may be compounds known as nucleating agents for poly(3-hydroxyalkanoate) resins. Specific examples other than pentaerythritol include erythritol, D-arabitol, ribitol, xylitol, galactitol, D-mannitol, L-mannitol, D-sorbitol, *myo*-inositol, *scyllo*-inositol, maltitol, and lactitol. In particular, the resin composition is preferably substantially free of pentaerythritol.

(Additional Resin)

The resin composition for film molding according to the present embodiment may contain an additional resin other than the P3HA resin (A) and the polylactic acid resin (B), to the extent that the additional resin does not diminish the effect of the invention. Examples of such additional resins include: aliphatic polyester resins such as polybutylene succinate adipate, polybutylene succinate, and polycaprolactone; and aliphatic-aromatic polyester resins such as polybutylene adipate terephthalate, polybutylene sebacate terephthalate, and polybutylene azelate terephthalate. The resin composition may contain only one additional resin or may contain two or more additional resins.

The amount of the additional resin is not limited to a particular range, but is preferably 1.5 parts by weight or less, more preferably 1.0 parts by weight or less, even more preferably 0.5 parts by weight or less, and particularly preferably 0.1 parts by weight or less per 100 parts by weight of the total amount of the P3HA resin (A) and the polylactic acid resin (B). The lower limit of the amount of the additional resin is not limited to a particular value and may be 0 parts by weight.

The resin composition for film molding according to the present embodiment may contain additives that can be used with the P3HA resin (A) and the polylactic acid resin (B), to the extent that the additives do not diminish the effect of the invention. Examples of such additives include: colorants such as pigments and dyes; odor absorbers such as activated carbon and zeolite; flavors such as vanillin and dextrin; and various other additives such as fillers, plasticizers, oxidation inhibitors, antioxidants, weathering resistance improvers, ultraviolet absorbers, mold release agents, water-repellent agents, anti-microbial agents, and slidability improvers. The resin composition may contain only one additive or may contain two or more additives. The amounts of such additives can be set by those skilled in the art as appropriate depending on the intended purpose.

The following describes fillers and plasticizers in detail.

(Filler)

The resin composition for film molding according to the present embodiment may contain a filler. The inclusion of a filler can increase the strength of the resulting film. The filler may be an inorganic filler, an organic filler, or a combination of both. The inorganic filler may be any inorganic filler that is not classified as the layered clay mineral (D) described above. Examples include silicate salts, carbonate salts, sulfate salts, phosphate salts, oxides, hydroxides, nitrides, and carbon black. One inorganic filler may be used alone, or two or more inorganic fillers may be used in combination.

When a filler other than the layered clay mineral (D) is used, the amount of the filler is not limited to a particular range, but is preferably from 1 to 100 parts by weight, more preferably from 3 to 80 parts by weight, even more preferably from 5 to 70 parts by weight, and still more preferably from 10 to 60 parts by weight per 100 parts by weight of the total amount of the P3HA resin (A) and the polylactic acid resin (B).

However, in order to improve printability and/or vapor deposition properties, the resin composition for film

molding according to the present embodiment is preferably substantially free of any filler other than the layered clay mineral (D). The expression "substantially free of any filler other than the layered clay mineral (D)" means that the amount of any filler other than the layered clay mineral (D) is less than 1 part by weight per 100 parts by weight of the total amount of the P3HA resin (A) and the polylactic acid resin (B). The amount of such a filler may be less than 0.5 parts by weight or less than 0.1 parts by weight.

(Plasticizer)

The resin composition for film molding according to the present embodiment may contain a plasticizer. Examples of plasticizers include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly effective in plasticizing the P3HA resin (A). Examples of glycerin ester compounds include glycerin diacetomonolaurate. Examples of citric ester compounds include tributyl acetylcitrate. Examples of sebacic ester compounds include dibutyl sebacate. Examples of dibasic ester compounds include benzyl methyl diethylene glycol adipate. One plasticizer may be used, or two or more plasticizers may be used. The proportions of the plasticizers used can be adjusted as appropriate depending on the intended purpose.

When a plasticizer is used, the amount of the plasticizer is not limited to a particular range, but is preferably from 0.1 to 1.5 parts by weight and more preferably from 0.5 to 1.0 parts by weight per 100 parts by weight of the total amount of the P3HA resin (A) and the polylactic acid resin (B). However, in order to improve printability and/or vapor deposition properties, the resin composition for film molding according to the present embodiment is preferably substantially free of any plasticizer. The expression "substantially free of any plasticizer" means that the amount of plasticizers is less than 1 part by weight per 100 parts by weight of the total amount of the P3HA resin (A) and the polylactic acid resin (B). The amount of plasticizers may be less than 0.5 parts by weight or less than 0.1 parts by weight.

The resin composition for film molding according to the present embodiment can be, but is not limited to being, produced by mixing the P3HA resin (A), the polylactic acid resin (B), and optionally other components using ordinary means and then melting and kneading the mixture. The melting and kneading can be carried out using a kneading device such as a single-screw or twin-screw extruder, a Banbury mixer, a pressure kneader, or a mixing roll. Through such melting and kneading, pellets made of the resin composition for film molding can be produced. However, the form of the resin composition for film molding is not limited to pellets.

According to the present embodiment, the incorporation of a given amount of the polylactic acid resin (B) enables shortening of the time required for production of the resin composition for film molding, i.e., for compounding.

[Film]

One aspect of the present embodiment relates to a film. The film according to the present embodiment can be produced with good productivity by virtue of the incorporation of a given amount of the polylactic acid resin (B).

The compositional makeup of the film will not be described in detail, as it falls within the scope of the compositional makeup described above for the resin composition for film molding according to the present embodiment. In this aspect related to the film, the term "total amount of the resin composition for film molding, excluding any inorganic filler" is to be understood interchangeably with "total weight of the film, excluding any inorganic filler."

The film according to the present embodiment may be produced using the resin composition for film molding described above, or may be directly produced, without using the composition, by mixing the components of the composition and melting the resulting mixture. Alternatively, other components may be added to the resin composition for film molding described above, and the resulting mixture may be used to produce the film.

The film may be an unstretched film that has not been subjected to stretching, or may be a stretched film that has been stretched in the MD direction and/or the TD direction after film molding. As used herein, the term "film" is intended to encompass both unstretched and stretched films. In terms of strength, the film is preferably a stretched film.

In terms of thickness uniformity, appearance, strength, and low weight, the thickness of the film (in particular, a stretched film) according to the present embodiment is preferably from 10 to 200 $\mu$m, more preferably from 15 to 150 $\mu$m, and even more preferably from 20 to 100 $\mu$m.

The film according to the present embodiment is preferably an industrially produced long film, and particularly preferably a strip-shaped film wound into a roll. The length of such a film is not limited to a particular range, and may be, for example, 50 m or more or 100 m or more. In the present embodiment, such a long film can be produced continuously and stably.

The film according to the present embodiment is preferably transparent so that, for example, when the film is used for packaging, the packaged product can be visually recognized. From this perspective, the haze value exhibited by the

film according to the present embodiment is preferably 70% or less, more preferably 60% or less, even more preferably 50% or less, and particularly preferably 40% or less. As described later, the haze value refers to a parameter measured according to JIS K 7136-1: 1999 and K 7316: 2000.

Since the film according to the present embodiment exhibits good printability and vapor deposition properties, a vapor-deposited layer or a printed layer can be provided directly on the surface of the film. Accordingly, the film according to the present embodiment can be suitably used as a film for vapor-deposited layer formation or printed layer formation. The film according to the present embodiment may include a vapor-deposited layer or a printed layer on at least a portion of its surface. The details of such a vapor-deposited layer or printed layer will be described later.

[Method for Producing Film]

Next, an example of a method for producing the film according to the present embodiment will be described. The present invention is not limited by the following description.

The film molding method is not limited to a particular technique. Preferably, a molten film raw material is extruded through a T-die; that is, extrusion molding is preferred. By extrusion molding, a film having a uniform thickness can easily be produced. The extrusion molding can be carried out using any suitable means such as a single-screw or twin-screw extruder.

When the resin composition for film molding according to the present embodiment is fed into an extruder, other components may also be fed together with the resin composition. Examples of such other components include additives for resins, and polylactic acid resins. It should be understood that the amounts of the other components are set such that the compositional makeup of the resulting blend containing these components falls within the scope of the compositional makeup described above for the resin composition for film molding.

In particular, when the amount of the polylactic acid resin (B) contained in the resin composition for film molding according to the present embodiment is relatively small, the polylactic acid resin (B) may be additionally added to the resin composition for film molding according to the present embodiment to increase the amount of the polylactic acid resin (B) in the film. This is done to improve productivity during film molding and enhance the stretchability of the film. In this case, the resin composition for film molding and the polylactic acid resin (B) are preferably dry-blended before being fed into the extruder. It should be understood that the amount of the polylactic acid resin (B) additionally added is set such that the final amount of the polylactic acid resin (B) in the film falls within the range described above for the amount of the polylactic acid resin (B) in the resin composition for film molding.

The melting of the film raw material may be performed under any conditions that allow the P3HA resin (A) and the polylactic acid resin (B) to melt. The temperature of the molten film raw material may be, for example, from about 140 to about 210 °C.

Next, the molten film raw material is extruded onto a cast roll to mold the material into a film. The melt of the film raw material comes into contact with the cast roll and moves along the surface of the cast roll, thus becoming cooled and solidified. In the present embodiment, since the polylactic acid resin (B) is incorporated in a given amount, the time required for solidification on the cast roll can be shortened despite the reduced amount of the fatty acid amide (C). As a result, the film production speed can be increased.

This step may involve extruding the melt onto a single cast roll or onto a plurality of cast rolls, or may involve placing a touch roll facing a cast roll and pressing the melt extruded onto the cast roll between the touch roll and the cast roll.

An air knife or an air chamber may be used to ensure stable contact of the melt with the cast roll. The cast roll may be placed in a water bath, or an air chamber may be used, to efficiently cool the side of the melt opposite the side in contact with the cast roll.

The set temperature of the cast roll is preferably at least 0 °C, more preferably at least 10 °C, and even more preferably at least 15 °C in order to reduce the tackiness of the P3HA resin (A) and improve the separability of the film from the cast roll. The set temperature of the cast roll is preferably higher than a temperature that is 10 °C above the glass transition temperature (Tg) of the P3HA resin (A).

The upper limit of the set temperature of the cast roll is not limited to a particular value. In order to accelerate the solidification of the P3HA resin (A), the set temperature is preferably up to 80 °C and more preferably up to 60 °C.

Next, the film cooled on the cast roll is transferred as the cast roll rotates, thereby separating the film from the cast roll. As a result, an unstretched film can be obtained.

The obtained film may be subsequently stretched in the MD direction to obtain a uniaxially stretched film having high strength in the MD direction. The MD direction is also referred to as the machine direction, flow direction, or longitudinal direction. The TD direction described later is a direction perpendicular to the MD direction, and is also referred to as the transverse direction or width direction.

The MD-direction stretching step can be performed directly after separation from the cast roll on the same production line. This step is not limited to using a particular technique, and can be performed, for example, by using a roll longitudinal stretching machine including a plurality of rolls over which the film is transferred, with the plurality of rolls

operated at different rotational speeds.

During the MD-direction stretching step, the film is preferably heated. The heating is not limited to using a particular technique, and examples of heating techniques include: a technique in which an air stream adjusted to a given temperature is applied to the film; a technique in which the film temperature is controlled by setting rolls to a given temperature; a technique in which the film temperature is controlled to a given temperature by heating the film using auxiliary heating means such as an IR heater; and a technique in which the film is passed through an oven adjusted to a given temperature. One of these techniques may be used alone, or two or more thereof may be used in combination.

In the film production according to the present embodiment, the temperature during MD-direction stretching is preferably 35 °C or higher, more preferably 45 °C or higher, and even more preferably 55 °C or higher. Generally, polylactic acid resins have a glass transition temperature of around 60 °C and, when rapidly cooled from a molten state, they do not readily crystallize but become amorphous. Thus, the film according to the present embodiment can readily soften even at a temperature below the melting point of the poly(3-hydroxyalkanoate) resin, and successful stretching can be achieved. In addition, the temperature during stretching can easily be controlled and stabilized. Accordingly, film stretching can be carried out continuously and stably, so that a long stretched film can be produced stably.

The upper limit of the temperature during MD-direction stretching is not limited to a particular value. In order to avoid breakage of the film during stretching, the temperature is preferably up to 110 °C, more preferably up to 100 °C, and even more preferably up to 90 °C.

The stretch ratio in the MD direction is not limited to a particular range, but is preferably 2 or more. The stretch ratio is more preferably 2.5 or more and even more preferably 3 or more. Such a high stretch ratio can be achieved by virtue of the compositional makeup of the film raw material according to the present embodiment. The upper limit of the stretch ratio is not limited to a particular value, and may be chosen as appropriate. For example, the stretch ratio may be up to 8.

The MD-direction stretching may be followed by stretching in the TD direction to obtain a biaxially stretched film having high strength in both the MD and TD directions. The TD-direction stretching step can be carried out directly after the MD-direction stretching step on the same production line. This step is not limited to using a particular technique, and can be performed, for example, by using a transverse stretching machine such as a clip tenter to clamp the film at both width ends and pull the clamped film in the TD direction.

The film is preferably heated during the TD-direction stretching step as well. The heating is not limited to using a particular technique, and any of the heating techniques described above for the MD-direction stretching step may be used.

The temperature during TD-direction stretching may be set similarly to the temperature during MD-direction stretching, and is preferably from 35 to 110 °C, more preferably from 45 to 100 °C, and even more preferably from 55 to 90 °C.

The stretch ratio in the TD direction is not limited to a particular range, but is preferably 2 or more. The stretch ratio is more preferably 3 or more and even more preferably 4 or more. Such a high stretch ratio can be achieved by virtue of the compositional makeup of the film raw material according to the present embodiment. The upper limit of the stretch ratio is not limited to a particular value and may be chosen as appropriate. For example, the stretch ratio may be up to 8.

After the MD-direction or TD-direction stretching step, it is preferable to perform a heat setting step in which the stretched film is heated to a temperature that allows high-melting-point crystals to grow. This step can increase the crystallinity and hence the strength of the stretched film, and can also stabilize the physical properties of the stretched film.

The heating temperature during the heat setting is preferably from 80 to 150 °C, more preferably from 90 to 135 °C, and most preferably from 100 to 130 °C. When the heating temperature is 80 °C or higher, the crystallinity of the stretched film increases, and the formed crystals can have a high melting point. When the heating temperature is 150 °C or lower, film breakage due to melting can be avoided.

The heat setting can be carried out, for example, by heating the stretched film while maintaining its stretched state after TD-direction stretching performed using a transverse stretching machine such as a clip tenter. During this step, since the film attempts to thermally shrink in a direction opposite to the stretch direction, relaxation is preferably performed to prevent breakage of the film. The relaxation is a procedure that allows the film to retract in the direction opposite to the stretch direction. The amount of relaxation is preferably adjusted as appropriate between 5% and 30%.

Subsequently, the step of cooling the film may be performed as appropriate. Subsequently, the step of winding the stretched film onto a take-up roll is preferably performed.

In the film production method according to the present embodiment, it is preferable to transfer the film continuously throughout all steps from melt extrusion to the final step. In this case, film production with good productivity can be accomplished by an industrially simple process. The production method according to the present embodiment can be carried out while continuously winding the produced film onto a take-up roll.

When the stretched film is continuously transferred, the transfer speed is not limited to a particular range. In terms of film productivity, the transfer speed is preferably 5 m/min or higher and more preferably 15 m/min or higher before the start of stretching. In terms of production stability, the transfer speed is preferably 50 m/min or lower before the start of stretching.

[Laminate]

The film according to the present embodiment may be a resin film consisting of a single self-supporting layer. Alternatively, a laminate may be formed by placing at least one other layer on one or both sides of the film (hereinafter also referred to as the first resin layer). Such a laminate is also one aspect of the present invention.

One example of the other layer is a second resin layer.

The resin used to form the second resin layer is not limited to a particular type. In order to enhance the biodegradability of the entire laminate, the second resin layer preferably contains a poly(3-hydroxyalkanoate) resin (E). The poly(3-hydroxyalkanoate) resin (E) is not limited to a particular type, and may be any of the poly(3-hydroxyalkanoate) resins mentioned above for the P3HA resin (A). Components other than the poly(3-hydroxyalkanoate) resin (E) are not limited to particular materials. Any components known as additives for resin layers, or other resins, may be used as appropriate.

The second resin layer can function as a substrate layer for the first resin layer (i.e., the film according to the present embodiment). The substrate layer is a layer for ensuring the primary physical properties such as strength of the laminate.

The method for forming the second resin layer is not limited to a particular technique, and may be a co-extrusion method, a dry lamination method, an extrusion lamination method, or a coating method.

A third resin layer that functions as a heat-sealable layer may be further provided on the second resin layer. The resin used to form the third resin layer is not limited to a particular type. In order to enhance the biodegradability of the entire laminate, the third resin layer preferably contains a poly(3-hydroxyalkanoate) resin (F). The poly(3-hydroxyalkanoate) resin (F) is not limited to a particular type, and may be any of the poly(3-hydroxyalkanoate) resins mentioned above for the P3HA resin (A). Components other than the poly(3-hydroxyalkanoate) resin (F) are not limited to particular materials. Any components known as additives for resin layers, or other resins, may be used as appropriate.

Further examples of the other layer of the laminate include vapor-deposited layers and printed layers. In particular, since the film according to the present embodiment exhibits improved printability and vapor deposition properties, a vapor-deposited layer or a printed layer can be provided directly on the surface of the film according to the present embodiment. Such a vapor-deposited layer or printed layer can exhibit good adhesion. Thus, in the laminate according to the present embodiment, the first resin layer can function as a layer for vapor-deposited layer formation or printed layer formation. The laminate according to the present embodiment may include a vapor-deposited layer or a printed layer on at least a portion of the surface of the first resin layer.

The vapor-deposited layer may typically be made of an inorganic material. Examples of the inorganic material include metals, inorganic oxides, and carbon. Specific examples include, but are not limited to, aluminum, aluminum oxide, silicon oxides (such as silicon monoxide, silicon dioxide, and silicon oxynitride), cerium oxide, calcium oxide, and diamond-like carbon. One of these materials may be used alone, or two or more thereof may be used in combination. In terms of post-vapor-deposition adhesion, the vapor-deposited layer is preferably a vapor-deposited metal layer, a vapor-deposited metal oxide layer, or a vapor-deposited silicon oxide layer, and particularly preferably a vapor-deposited aluminum layer, a vapor-deposited aluminum oxide layer, or a vapor-deposited silicon oxide layer.

The thickness of the vapor-deposited layer is not limited to a particular range. In terms of productivity, handleability, and appearance, the thickness may be from about 1 to about 1000 nm, and is preferably from 2 to 50 nm and more preferably from 3 to 100 nm.

The vapor-deposited layer can be formed by a known method such as vacuum deposition.

The printed layer is not limited to particular details, and can be formed by a known printing method using a known printing ink. Examples of printing methods include gravure printing, offset printing, gravure offset printing, flexographic printing, and inkjet printing. The printing ink may be solvent-based or water-based. The printed layer may be a single layer or may consist of a plurality of layers.

In a laminate according to a preferred aspect, the second and third resin layers may be provided on one side of the first resin layer which is the film according to the present embodiment, and the vapor-deposited layer and/or the printed layer may be provided directly on the other side of the first resin layer.

[Applications of Film or Laminate]

The film or laminate according to the present embodiment can be suitably used as a packaging film, a heat-sealable film, or a twist film.

In the following items, preferred aspects of the present disclosure are listed. The present invention is not limited to the following items.

[Item 1]

A resin composition for film molding, containing:

a poly(3-hydroxyalkanoate) resin (A); and
a polylactic acid resin (B), wherein
an amount of the polylactic acid resin (B) is from 20 to 65 wt% based on a total amount of the poly(3-hydroxyalkanoate) resin (A) and the polylactic acid resin (B),
an amount of a fatty acid amide (C) is from 0 to less than 0.5 parts by weight per 100 parts by weight of the poly(3-hydroxyalkanoate) resin (A), and
a total proportion of the poly(3-hydroxyalkanoate) resin (A) and the polylactic acid resin (B) in a total amount of the resin composition for film molding, excluding any inorganic filler, is 98.5 wt% or more.

[Item 2]

The resin composition for film molding according to item 1, being substantially free of the fatty acid amide (C).

[Item 3]

The resin composition for film molding according to item 1 or 2, wherein the poly(3-hydroxyalkanoate) resin (A) contains a poly(3-hydroxyalkanoate) copolymer (A1).

[Item 4]

The resin composition for film molding according to item 3, wherein the poly(3-hydroxyalkanoate) copolymer (A1) is a copolymer that contains 3-hydroxybutyrate units and other hydroxyalkanoate units and in which a proportion of the other hydroxyalkanoate units in a total amount of the 3-hydroxybutyrate units and the other hydroxyalkanoate units is from 1 to less than 24 mol%.

[Item 5]

The resin composition for film molding according to item 3 or 4, wherein the poly(3-hydroxyalkanoate) copolymer (A1) is a copolymer of 3-hydroxybutyrate units and 3-hydroxyhexanoate units.

[Item 6]

The resin composition for film molding according to any one of items 1 to 5, wherein the poly(3-hydroxyalkanoate) resin (A) further contains a poly(3-hydroxybutyrate) (A2).

[Item 7]

The resin composition for film molding according to any one of items 1 to 6, wherein the polylactic acid resin (B) is a crystalline polylactic acid resin.

[Item 8]

The resin composition for film molding according to item 7, wherein the crystalline polylactic acid resin has a melting point lower than 160 °C.

[Item 9]

The resin composition for film molding according to any one of items 1 to 8, further containing a layered clay mineral (D).

[Item 10]

The resin composition for film molding according to item 9, wherein an amount of the layered clay mineral (D) is from 1 to 8 parts by weight per 100 parts by weight of the poly(3-hydroxyalkanoate) resin (A).

[Item 11]

A film containing:

a poly(3-hydroxyalkanoate) resin (A); and
a polylactic acid resin (B), wherein
an amount of the polylactic acid resin (B) is from 20 to 65 wt% based on a total amount of the poly(3-hydroxyalkanoate) resin (A) and the polylactic acid resin (B),
an amount of a fatty acid amide (C) is from 0 to less than 0.5 parts by weight per 100 parts by weight of the poly(3-hydroxyalkanoate) resin (A), and
a total proportion of the poly(3-hydroxyalkanoate) resin (A) and the polylactic acid resin (B) in a total weight of the film, excluding any inorganic filler, is 98.5 wt% or more.

[Item 12]

The film according to item 11, wherein the film is a stretched film.

[Item 13]

The film according to item 11 or 12, wherein the amount of the polylactic acid resin (B) is 30 wt% or more based on the total amount of the poly(3-hydroxyalkanoate) resin (A) and the polylactic acid resin (B).

[Item 14]

A laminate including:

a first resin layer containing the resin composition for film molding according to any one of items 1 to 10; and
a second resin layer provided on the first resin layer.

[Item 15]

The laminate according to item 14, wherein the second resin layer contains a poly(3-hydroxyalkanoate) resin (E).

[Item 16]

The laminate according to item 14 or 15, further including a vapor-deposited layer on at least a portion of a surface of the first resin layer.

[Item 17]

The laminate according to any one of items 14 to 16, further including a printed layer on at least a portion of a surface of the first resin layer.

**Examples**

Hereinafter, the present invention will be described in more detail with reference to Examples and Comparative Examples. The present invention is not limited by these examples in any respect.
The following materials were used in the examples.

(Poly(3-Hydroxyalkanoate) Resin (A))

Poly(3-hydroxybutyrate-co-3-hydroxyhexanoate) (P3HB3HH) resins A-1 and A-2 and poly(3-hydroxybutyrate) A-3 listed below were used as P3HA resins (A). The term "3HB" denotes 3-hydroxybutyrate repeating units, and "3HH" denotes 3-hydroxyhexanoate repeating units.

A-1: P3HB3HH (average 3HB/3HH ratio = 94/6 (mol%/mol%), weight-average molecular weight = $60 \times 10^4$ g/mol)

This resin was produced according to the method described in Example 1 of WO 2019/142845 A1.

A-2: P3HB3HH (average 3HB/3HH ratio = 88.9/11.1 (mol%/mol%), weight-average molecular weight = 60 $\times$ $10^4$ g/mol)

This resin was produced according to the method described in an example (Material A-3) of WO 2013/147139 A1.

A-3: PHB (poly(3-hydroxybutyrate)) (weight-average molecular weight = 35 $\times$ $10^4$ g/mol)

This resin was produced according to the method described in Comparative Example 1 of WO 2004/041936 A1.

(Polylactic Acid Resin (B))

B-1: PLA (LX175 grade, manufactured by Total Corbion PLA, melting point peak temperature = 155 °C)

(Fatty Acid Amide (C))

C-1: Behenamide (BNT-22H, manufactured by Nippon Fine Chemical Co., Ltd.)

(Layered Clay Mineral (D))

D-1: Talc (SG-200N15, manufactured by Nippon Talc Co., Ltd.)

(Nucleating Agent)

E-1: Pentaerythritol abbreviated as PETL (Neulizer P, manufactured by Mitsubishi Chemical Corporation)
The evaluations described below were conducted in Examples and Comparative Examples.

[Pellet Moldability]

In resin pellet molding, the strand discharged from the pelletizing die was immersed in a water bath at 45 °C, and the time required for the strand to lose elasticity perceptible by tactile inspection was measured as the solidification time. The strand haul-off speed was 10 m/min, and the length of the water bath was 2 m. When the strand remained unsolidified after being extruded to a length of 2 m from the die, the strand was folded a plurality of times until solidification was complete. If the strand failed to solidify even after the total length of the folded strand reached 20 m, the strand was evaluated as "unsolidified", which means that pellet molding was impossible.

[Film Moldability]

Film moldability was evaluated based on the haul-off speed measured during T-die film production. The evaluation criteria were as set forth below. The "haul-off speed" refers to the maximum speed at which the film can be transferred from the cast roll to the subsequent roll without sticking to the cast roll, and serves as an indicator of whether the film has sufficiently solidified on the cast roll. If the haul-off speed exceeds the maximum speed, the point at which the film separates from the cast roll shifts in the rotational direction of the cast roll due to the tackiness of the film, with the result that the film is forcibly peeled from the cast roll during transfer.

<Evaluation Criteria>

Good: The haul-off speed was 15 m/min or more.
Average: The haul-off speed was from 5 to less than 15 m/min.
Poor: The haul-off speed was less than 5 m/min.

[Film Stretchability]

A film was prepared from resin pellets using a T-die and then continuously stretched to three times its original

length in the MD direction (the flow direction during T-die film preparation) using a roll stretching machine within a temperature range of 60 to 70 °C. The stretchability limit was evaluated according to the criteria set forth below.

In addition, the film stretched in the MD direction was fixed at both ends in the MD direction and stretched to five times its original width in the TD direction (the direction perpendicular to the MD direction) within a temperature range of 70 to 80 °C. The stretchability limit was evaluated according to the criteria set forth below.

<Evaluation Criteria>

Good: A stretched film was obtained without film breakage during stretching, and the obtained film showed no visually discernible signs of uneven stretching (unevenly stretched areas such as areas of non-uniform film thickness).

Average: A stretched film was obtained without film breakage during stretching, but the obtained film showed some visually discernible signs of uneven stretching (unevenly stretched areas such as areas of non-uniform film thickness).

Poor: Film breakage occurred during stretching, or the resulting film showed visually discernible signs of uneven stretching (unevenly stretched areas such as areas of non-uniform film thickness) over its entirety.

[Film Thickness]

The thickness of the film was measured using a caliper at 10 points spaced at intervals of 10 cm in the TD direction. The arithmetic mean of the 10 thickness values was calculated as the film thickness.

[Film Haze Value]

The haze value of the film having a thickness of 30 μm was measured using HZ-V3, a haze meter manufactured by Suga Test Instruments Co., Ltd., according to JIS K 7136-1: 1999 and K 7316: 2000.

[Printability]

Using a water-based black brush pen, an ink was spread on the surface of each of the films produced in Examples and Comparative Examples to examine whether the film surface was repellent to the ink.

Good: The film surface did not repel the ink.
Poor: The film surface repelled the ink.

[Vapor Deposition Properties]

A vapor-deposited layer (thickness = 100 nm) containing aluminum as an inorganic material was formed on the surface of each of the films produced in Examples and Comparative Examples.

The vapor-deposited layer formation was performed on a 30 mm × 30 mm cut piece of the film using a deposition system (UHSP-T2040H, manufactured by Shimadzu Industrial Systems Co., Ltd.) under an argon gas atmosphere.

The obtained film having the vapor-deposited layer was subjected to a cross-cut test (JIS K 5600-6), and the adhesion of the vapor-deposited layer was evaluated based on the proportion (%) of the area over which the vapor-deposited layer peeled in the entire tested surface.

<Evaluation Criteria>

Good: The proportion of the area over which the vapor-deposited layer peeled was less than 25%.

Average: The proportion of the area over which the vapor-deposited layer peeled was from 25 to 75%.

Poor: The proportion of the area over which the vapor-deposited layer peeled was more than 75%.

(Resin Pellet Production)

(Example 1)

The poly(3-hydroxyalkanoate) resins A-1, A-2, and A-3 and the polylactic acid B-1 were used in the following proportions (relative to the total weight of the P3HAs and the PLA): A-1, 48 wt%; A-2, 4 wt%; A-3, 8 wt%; and B-1, 40 wt%. The layered clay mineral D-1 was dry-blended with these resins in an amount of 2 parts by weight per 100 parts by weight of the poly(3-hydroxyalkanoate) resins. The resulting resin material was fed into the hopper of a 26-mm-diameter corotating

twin-screw extruder whose cylinder temperature and die temperature were set to 150 °C. The resin material was melted and kneaded in the extruder and extruded as a strand through the die. The extruded strand was solidified by passing it through a water bath filled with hot water at 45 °C. The solidified strand was cut using a pelletizer to obtain resin pellets P-1. During this process, pellet moldability was evaluated. The evaluation result is shown in Table 1.

(Examples 2 to 9)

Resin pellets P-2 to P-9 were produced in the same manner as the pellets of Example 1, except that the formulation was changed as shown in Table 1. During these processes, pellet moldability was evaluated. The evaluation results are shown in Table 1.

(Comparative Examples 1 to 4)

Resin pellets P-10 to P-13 were produced in the same manner as the pellets of Example 1, except that the formulation was changed as shown in Table 1. During these processes, pellet moldability was evaluated. The evaluation results are shown in Table 1.

[Table 1]

| | | | Units | Ex. 1 | Ex. 2 | Ex. 3 | Ex. 4 | Ex. 5 | Ex. 6 | Ex. 7 | Ex. 8 | Ex. 9 | Comp. 1 | Comp. 2 | Comp. 3 | Comp. 4 |
|---|---|---|---|---|---|---|---|---|---|---|---|---|---|---|---|---|
| | | | | P-1 | P-2 | P-3 | P-4 | P-5 | P-6 | P-7 | P-8 | P-9 | P-10 | P-11 | P-12 | P-13 |
| Resin composition | P3HA (A) | A-1 (HH: 6 mol%) | wt% | 48 | 56 | 64 | 56 | 60 | 60 | 32 | 48 | 48 | 80 | 60 | 48 | 48 |
| | | A-2 (HH: 11 mol%) | wt% | 4 | 5 | 5 | 5 | 0 | 0 | 3 | 4 | 4 | 7 | 0 | 4 | 4 |
| | | A-3 (PHB) | wt% | 8 | 9 | 11 | 9 | 0 | 0 | 5 | 8 | 8 | 13 | 0 | 8 | 8 |
| | PLA (B) | PLA LX175 | wt% | 40 | 30 | 20 | 30 | 40 | 40 | 60 | 40 | 40 | 0 | 0 | 40 | 40 |
| | Fatty acid amide (C) | Behenamide | parts by weight*1 | 0 | 0 | 0 | 0.3 | 0 | 0 | 0 | 0 | 0 | 0 | 0 | 0.5 | 0 |
| | Layered clay mineral (D) | Talc | parts by weight*1 | 2 | 2 | 2 | 2 | 2 | 2 | 2 | 0 | 10 | 2 | 2 | 2 | 2 |
| | Another additive | PETL | parts by weight*1 | 0 | 0 | 0 | 0 | 0 | 1 | 0 | 0 | 0 | 0 | 0 | 0 | 2 |
| | Total proportion of (A) + (B) in composition excluding inorganic filler | | wt% | 100 | 100 | 100 | 99.8 | 100 | 98.8 | 100 | 100 | 100 | 100 | 100 | 99.7 | 98.0 |
| Evaluation results | Pellet moldability | Strand solidification time | sec | 20 | 40 | 80 | 30 | 50 | 15 | 15 | 40 | 19 | Unsolidified | Unsolidified | 25 | 12 |

*1) Parts by weight per 100 parts by weight of P3HA (A)

As shown in Table 1, resin pellets were successfully molded in Examples 1 to 9 and in Comparative Examples 3 and 4. In contrast, in Comparative Examples 1 and 2, in which no polylactic acid was incorporated, the strands failed to solidify under the testing conditions described above, and resin pellets were not obtained.

(Biaxially Stretched Film Production)

(Example 10)

The resin pellets P-1 were fed into a single-screw extruder whose cylinder temperature and die temperature were set to 160 °C, and the resin material was extruded as a film through a T-die. The resulting molded film was cooled on a cast roll with a set temperature of 40 °C and then taken up onto a take-up roll. This film was continuously stretched to three times its original length in the MD direction using a roll longitudinal stretching machine at 60 to 70 °C. Subsequently, the film was further stretched continuously in the width (TD) direction using a transverse stretching machine (clip tenter) at a stretch temperature of 70 to 80 °C and a stretch ratio of 5. The film subjected to biaxial stretching was then cooled to 50 °C, and the ends of the width of the cooled film were trimmed to obtain a biaxially stretched film having a width of 1200 mm and a thickness of 30 μm. The above processes were carried out successively.

The film was inspected after the MD-direction stretching and after the TD-direction stretching to evaluate film stretchability. The resulting stretched film was assessed for thickness, haze value, printability, and vapor deposition properties. The evaluation results are shown in Table 2.

(Examples 11 to 20)

Film production was performed in the same manner as in Example 10, except that the resin pellets used were changed as shown in Table 2. Film stretchability was evaluated, and the resulting stretched films were assessed for thickness, haze value, printability, and vapor deposition properties. The evaluation results are shown in Table 2.

In the film production of Example 11, the resin pellets P-1 were dry-blended with the polylactic acid B-1 before being fed into the extruder so that the proportion of the polylactic acid B-1 in the resulting film was 60 wt% (relative to the total weight of the P3HAs and the polylactic acid).

In Examples 13 and 14, the resin pellets P-3 were dry-blended with the polylactic acid B-1 before being fed into the extruder so that the proportion of the polylactic acid B-1 in the resulting film was 30 wt% or 40 wt%.

(Comparative Examples 5 and 6)

Film production was performed in the same manner as in Example 10, except that the resin pellets used were changed as shown in Table 2. Film stretchability was evaluated, and the resulting stretched films were assessed for thickness, haze value, printability, and vapor deposition properties. The evaluation results are shown in Table 2.

[Table 2]

| | | | | Ex. 10 | Ex. 11 | Ex. 12 | Ex. 13 | Ex. 14 | Ex. 15 | Ex. 16 | Ex. 17 | Ex. 18 | Ex. 19 | Ex. 20 | Comp. 5 | Comp. 6 |
|---|---|---|---|---|---|---|---|---|---|---|---|---|---|---|---|---|
| | | Pellets used | | P-1 | P-1 | P-2 | P-3 | P-3 | P-4 | P-5 | P-6 | P-7 | P-8 | P-9 | P-12 | P-13 |
| Formulation | P3HA (A) | A-1 (HH: 6 mol%) | wt% | 48 | 48 | 56 | 64 | 64 | 56 | 60 | 60 | 32 | 48 | 48 | 48 | 48 |
| | | A-2 (HH: 11 mol%) | wt% | 4 | 4 | 5 | 5 | 5 | 5 | 0 | 0 | 3 | 4 | 4 | 4 | 4 |
| | | A-3 (PHB) | wt% | 8 | 8 | 9 | 11 | 11 | 9 | 0 | 0 | 5 | 8 | 8 | 8 | 8 |
| | PLA (B) | PLA LX175 | wt% | 40 | 40 | 30 | 20 | 20 | 30 | 40 | 40 | 60 | 40 | 40 | 40 | 40 |
| | Fatty acid amide (C) | Behenamide | parts by weight*1 | 0 | 0 | 0 | 0 | 0 | 0.3 | 0 | 0 | 0 | 0 | 0 | 0.5 | 0 |
| | Layered clay mineral (D) | Talc | parts by weight*1 | 2 | 2 | 2 | 2 | 2 | 2 | 2 | 2 | 2 | 0 | 10 | 2 | 2 |
| | Another additive | PETL | parts by weight*1 | 0 | 0 | 0 | 0 | 0 | 0 | 0 | 1 | 0 | 0 | 0 | 0 | 2 |
| | PLA adjustment in film production | Final amount of PLA (B) (Parenthesized is the additional amount) | wt% | 40 | 60 (+20) | 30 | 30 (+10) | 40 (+20) | 30 | 40 | 40 | 60 | 40 | 40 | 40 | 40 |
| | Total proportion of (A) + (B) in composition excluding filler inorganic inorganic filler | | | 100 | 100 | 100 | 100 | 100 | 99.8 | 100 | 98.8 | 100 | 100 | 100 | 99.7 | 98.0 |

(continued)

| | | | | Ex. 10 | Ex. 11 | Ex. 12 | Ex. 13 | Ex. 14 | Ex. 15 | Ex. 16 | Ex. 17 | Ex. 18 | Ex. 19 | Ex. 20 | Comp. 5 | Comp. 6 |
|---|---|---|---|---|---|---|---|---|---|---|---|---|---|---|---|---|
| Pellets used | | | | P-1 | P-1 | P-2 | P-3 | P-3 | P-4 | P-5 | P-6 | P-7 | P-8 | P-9 | P-12 | P-13 |
| Evaluation results | Film mold-ability | Haul-off speed | | Good | Good | Good | Good | Good | Good | Average | Good | Good | Average | Good | Good | Good |
| | Film stretch-ability | MD stretching To 3 times at 60-7 °C | - | Good | Good | Average | Average | Good | Average | Good | Good | Good | Good | Good | Good | Good |
| | | TD stretching To 5 times at 70-80 °C | - | Good | Good | Average | Average | Good | Average | Good | Good | Good | Good | Good | Good | Good |
| | Film proper-ties | Thickness | μm | 30 | 30 | 30 | 30 | 30 | 30 | 30 | 30 | 30 | 30 | 30 | 30 | 30 |
| | | Haze value | % | 31 | 16 | 42 | 31 | 30 | 42 | 20 | 21 | 15 | 11 | 80 | 20 | 20 |
| | | Printability | - | Good | Good | Good | Good | Good | Good | Good | Average | Good | Good | Average | Poor | Poor |
| | | Vapor deposition properties | - | Good | Good | Good | Good | Good | Average | Good | Average | Good | Good | Average | Poor | Poor |
| *1) Parts by weight per 100 parts by weight of P3HA (A) | | | | | | | | | | | | | | | | |

As shown in Table 2, Examples 10 to 20 provided good evaluation results for the printability and vapor deposition properties of the resulting films. In contrast, Comparative Example 5, in which the amount of the fatty acid amide (C) was large, showed unsatisfactory results for both printability and vapor deposition properties. Comparative Example 6, in which the total proportion of the P3HA resins (A) and the polylactic acid resin (B) in the composition excluding the inorganic filler was low, also exhibited unsatisfactory results for both printability and vapor deposition properties.

## Claims

**1.** A resin composition for film molding, comprising:

a poly(3-hydroxyalkanoate) resin (A); and
a polylactic acid resin (B), wherein
an amount of the polylactic acid resin (B) is from 20 to 65 wt% based on a total amount of the poly(3-hydroxyalkanoate) resin (A) and the polylactic acid resin (B),
an amount of a fatty acid amide (C) is from 0 to less than 0.5 parts by weight per 100 parts by weight of the poly(3-hydroxyalkanoate) resin (A), and
a total proportion of the poly(3-hydroxyalkanoate) resin (A) and the polylactic acid resin (B) in a total amount of the resin composition for film molding, excluding any inorganic filler, is 98.5 wt% or more.

**2.** The resin composition for film molding according to claim 1, being substantially free of the fatty acid amide (C).

**3.** The resin composition for film molding according to claim 1, wherein the poly(3-hydroxyalkanoate) resin (A) comprises a poly(3-hydroxyalkanoate) copolymer (A1).

**4.** The resin composition for film molding according to claim 3, wherein the poly(3-hydroxyalkanoate) copolymer (A1) is a copolymer that comprises 3-hydroxybutyrate units and other hydroxyalkanoate units and in which a proportion of the other hydroxyalkanoate units in a total amount of the 3-hydroxybutyrate units and the other hydroxyalkanoate units is from 1 to less than 24 mol%.

**5.** The resin composition for film molding according to claim 3, wherein the poly(3-hydroxyalkanoate) copolymer (A1) is a copolymer of 3-hydroxybutyrate units and 3-hydroxyhexanoate units.

**6.** The resin composition for film molding according to claim 3, wherein the poly(3-hydroxyalkanoate) resin (A) further comprises a poly(3-hydroxybutyrate) (A2).

**7.** The resin composition for film molding according to claim 1, wherein the polylactic acid resin (B) is a crystalline polylactic acid resin.

**8.** The resin composition for film molding according to claim 7, wherein the crystalline polylactic acid resin has a melting point lower than 160 °C.

**9.** The resin composition for film molding according to claim 1, further comprising a layered clay mineral (D).

**10.** The resin composition for film molding according to claim 9, wherein an amount of the layered clay mineral (D) is from 1 to 8 parts by weight per 100 parts by weight of the poly(3-hydroxyalkanoate) resin (A).

**11.** A film comprising:

a poly(3-hydroxyalkanoate) resin (A); and
a polylactic acid resin (B), wherein
an amount of the polylactic acid resin (B) is from 20 to 65 wt% based on a total amount of the poly(3-hydroxyalkanoate) resin (A) and the polylactic acid resin (B),
an amount of a fatty acid amide (C) is from 0 to less than 0.5 parts by weight per 100 parts by weight of the poly(3-hydroxyalkanoate) resin (A), and
a total proportion of the poly(3-hydroxyalkanoate) resin (A) and the polylactic acid resin (B) in a total weight of the film, excluding any inorganic filler, is 98.5 wt% or more.

**12.** The film according to claim 11, wherein the film is a stretched film.

**13.** The film according to claim 11, wherein the amount of the polylactic acid resin (B) is 30 wt% or more based on the total amount of the poly(3-hydroxyalkanoate) resin (A) and the polylactic acid resin (B).

**14.** A laminate comprising:

a first resin layer that is the film according to claim 11; and
a second resin layer provided on the first resin layer.

**15.** The laminate according to claim 14, wherein the second resin layer comprises a poly(3-hydroxyalkanoate) resin (E).

**16.** The laminate according to claim 14, further comprising a vapor-deposited layer on at least a portion of a surface of the first resin layer.

**17.** The laminate according to claim 14, further comprising a printed layer on at least a portion of a surface of the first resin layer.

**INTERNATIONAL SEARCH REPORT**

International application No.
**PCT/JP2024/035784**

**A. CLASSIFICATION OF SUBJECT MATTER**

***C08L 67/04***(2006.01)i; ***B32B 27/36***(2006.01)i; ***C08J 5/18***(2006.01)i; ***C08K 3/34***(2006.01)i
FI: C08L67/04 ZBP; C08K3/34; B32B27/36; C08J5/18 CFD

According to International Patent Classification (IPC) or to both national classification and IPC

**B. FIELDS SEARCHED**

Minimum documentation searched (classification system followed by classification symbols)

C08L67/04; B32B27/36; C08J5/18; C08K3/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 10-147653 A (GUNZE LIMITED) 02 June 1998 (1998-06-02) claims, examples | 1-4, 7-8, 11-13 |
| X | JP 10-053698 A (SHIMADZU CORPORATION) 24 February 1998 (1998-02-24) claims, paragraph [0028], examples | 1-2, 7-8, 11,13 |
| X | CN 105985614 A (TORAY ADVANCED MATERIALS RESEARCH LABORATORIES (CHINA) CO., LTD.) 05 October 2016 (2016-10-05) claims, examples | 1-2, 7-8, 11,13 |
| X | CN 101210101 A (TIANJIN GREEN BIOSCIENCES LIMITED COMPANY) 02 July 2008 (2008-07-02) claims, p. 7, line 19 to p. 10, line 9, examples | 1-4, 7-13 |
| A | CN 116178915 A (TORAY ADVANCED MATERIALS RESEARCH LABORATORIES (CHINA) CO., LTD.) 30 May 2023 (2023-05-30) claims, examples | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 October 2024** | **10 December 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No. PCT/JP2024/035784

C. DOCUMENTS CONSIDERED TO BE RELEVANT

| Category* | Citation of document, with indication, where appropriate, of the relevant passages | Relevant to claim No. |
|---|---|---|
| A | JP 10-006445 A (DAI NIPPON PRINTING CO., LTD.) 13 January 1998 (1998-01-13) claims, examples | 1-17 |
| P, X | JP 2024-127801 A (TORAY INDUSTRIES, INC.) 20 September 2024 (2024-09-20) claims, examples (in particular, examples 15-16) | 1-5, 7-8, 11-13 |
| P, X | WO 2024/090484 A1 (KANEKA CORP.) 02 May 2024 (2024-05-02) claims, examples (in particular, example 6) | 1-3, 5, 7-8, 11, 13 |
| P, X | CN 117507538 A (XIAMEN CHANGSU INDUSTRIAL CO., LTD.) 06 February 2024 (2024-02-06) claims, examples (in particular, example 2) | 1-5, 7-15 |
| P, A | WO 2024/030834 A1 (DANIMER IPCO, LLC) 08 February 2024 (2024-02-08) claims, examples | 1-17 |

Form PCT/ISA/210 (second sheet) (July 2022)

**INTERNATIONAL SEARCH REPORT**
**Information on patent family members**

International application No.
**PCT/JP2024/035784**

| Patent document cited in search report | Publication date (day/month/year) | Patent family member(s) | Publication date (day/month/year) |
|---|---|---|---|
| JP 10-147653 A | 02 June 1998 | (Family: none) | |
| JP 10-053698 A | 24 February 1998 | (Family: none) | |
| CN 105985614 A | 05 October 2016 | (Family: none) | |
| CN 101210101 A | 02 July 2008 | (Family: none) | |
| CN 116178915 A | 30 May 2023 | (Family: none) | |
| JP 10-006445 A | 13 January 1998 | (Family: none) | |
| JP 2024-127801 A | 20 September 2024 | (Family: none) | |
| WO 2024/090484 A1 | 02 May 2024 | (Family: none) | |
| CN 117507538 A | 06 February 2024 | (Family: none) | |
| WO 2024/030834 A1 | 08 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009122673 A1
- JP 2022185793 A
- WO 2013147139 A1
- WO 2019142845 A1
- WO 2004041936 A1


### Non-patent literature cited in the description


- **T. FUKUI** ; **Y. DOI**. *J. Bacteriol*, 1997, vol. 179, 4821-4830